# EUROPEAN PATENT SPECIFICATION

(11) **EP 2 833 684 B1**
(45) Date of publication and mention of the grant of the patent: **20.12.2017**
(21) Application number: 13003782.3
(22) Date of filing: 30.07.2013
(51) Int. Cl.: H04W 64/00, H04W 84/18, G01S 5/02

(54) **Sensors network for indoor tracking of mobile units**
Sensoren-Netzwerk für die Innenortung mobiler Einheiten
Réseau de caoteurs pour suivi d'intérieur d'unités mobiles

(43) Date of publication of application: 04.02.2015
(73) Proprietor: Airbus Defence and Space GmbH, 82024 Taufkirchen (DE)
(72) Inventor: Schäfer, Christof, D-85551 Kirchheim (DE)
(74) Representative: Krebs, Jörg

(56) References cited:
- WO-A2-2008/033794
- WO-A2-2012/149565
- CN-A- 101 909 353
- KR-A- 20100 081 643
- US-A- 5 977 913
- US-A1- 2008 189 170
- US-A1- 2011 070 833
- US-A1- 2012 015 665

## Description

### TECHNICAL FIELD

The invention relates to a system for indoor tracking of mobile units, with which lack of connectivity can be overcome.

### BACKGROUND

Typically data generated by and for indoor tracking solutions are transferred to an outside control and processing system using standard mobile RF communication means, like GSM, UMTS, LTE, Wifi™ etc.. Experience shows that in certain areas of buildings like underground parkings, multi-storeyed basements etc. connectivity to an outside control and processing system using standard mobile radio communication means can often not be provided unless the area would be equipped with a bespoke transponder infrastructure. Investing into such bespoke transponder infrastructure for the purpose of indoor tracking in all buildings is usually not considered a commercially viable solution.

Furthermore lack of connectivity is immanent on purpose in one of the most prominent case requiring reliable autonomous indoor tracking, which is an emergency incident like a major fire in a building. First thing firefighters do before entering a building on fire is turning off power because it represents a safety risk for firefighters acting inside the building. Consequently bespoke building infrastructure like mobile communication transponders or Wifi™ networks will be down throughout the whole building.

In addition, today's architecture likes to use materials for facades, which decrease or even block RF penetration on frequencies required for mobile communication.

WO2008/033794A2 discloses a system for tracking persons in a structure, using a mobile unit for transmitting a distinctive beacon signal to a wireless array network of RF transceivers when the signal is within a predetermined distance of one or more RF transceivers, and transmitting the received RF beacon signal and a signal representative of itself to other RF transceivers through the array to a computer gateway. The computer determines the location of the mobile unit from the transmitted signals and displays the location.

US2012/015665A1 describes systems, methods, and devices for determining a physical location of a wireless device. A receiver may be configured to receive associations between anchor locations and sensor nodes, wherein each sensor node uses near field communications to identify an anchor location. The receiver may also receive signal strength measurements from the wireless device measuring the signal strength of wireless sensor nodes. Arrangements may also be configured to determine physical locations of the sensor nodes based on physical locations of anchor locations and utilize received signal strength measurements with the determined physical locations of the sensor nodes to determine the physical location of the wireless device.

US2011/070833A1 provides a method and system for determining a near-field communication interaction in a wireless tracking mesh network. The method and system preferably utilize near-field communication devices in conjunction with tracking tags to transmit signals for reception by sensors stationed throughout a facility which form a mesh network and forward the signals to an information engine for analysis. Bearers of the near-field communication devices preferably include individuals, objects, assets and rooms of the facility.

### SUMMARY OF INVENTION

It is an object of the invention to provide an improved system for indoor tracking of mobile units, with which lack of connectivity can be overcome.

This object is achieved by the subject matter of the independent claims. Further embodiments are shown by the dependent claims.

The invention is based on the following thoughts: Any solution for the tracking of individuals and assets in indoor environments requires a communication link for transferring either sensor measurements to be processed for localization or position information to a type of monitoring and control element typically located outside the indoor environment. Connectivity often becomes a problem, e.g. in basements and underground environments, as well as in case of loss of power inside a building in case of emergency incidents. In order to overcome this problem, the invention proposes to apply a network of sensors for tracking mobile units such as mobile phones or mobile location devices or mobile devices with respective localization capability in general particularly in an area with lack of connectivity for standard RF mobile communication means and to route tracking data of mobile units from sensor to sensor in the network to a transmitter with a communication link to a monitoring and control element for the mobile units. Sensors can be implemented for example as smoke sensors with the capability to be connected to each other and to pass on notice of an incident detected by one sensor to all other sensors in a building to raise the alarm everywhere. An indoor sensor according to the invention can for example carry an active or passive RFID (Radio Frequency Identification) element, which can serve for detecting a respectively passive or active RFID element attached to a person or asset to be tracked. Tracking data, particularly either sensor data or positioning data, can be transferred to a processing element outside the indoor environment such as the above mentioned monitoring and control element. This can typically be done by mobile communication of sorts. Especially in buildings with extensive underground segments and buildings with specific facade materials connectivity may be very poor to completely blocked.

An embodiment of the invention relates to a system for indoor tracking of mobile units comprising a monitoring and control element for processing tracking data of mobile units, a transmitter for transmitting the tracking data via a communication link to the monitoring and control element, and a network of sensors, wherein each sensor is adapted to communicate with mobile units located within a monitoring area of the sensor and to route tracking data of mobile units over other sensors located in its neighborhood to the transmitter. Thus, mobile units can also be tracked in areas with poor reception of mobile RF signals such as in basements of buildings.

The tracking data routed from a sensor to the transmitter may comprise sensor data and/or positioning data. The sensor data may be for example a unique identification of the sensor, which is the origin of the route of the tracking data. The positioning data may be for example positioning data from the sensor, such as a stored installation position of the sensor in a building.

Each sensor may be adapted to automatically route tracking data of a mobile unit upon establishment of a communication with the mobile unit. For example, a sensor may be in a kind of watch state, in which it detects RF signals from mobile units within its monitoring area and establishes communication links with the mobile units if possible. The, upon establishment of a communication link with a mobile unit, the sensor can automatically initiate a routing of tracking data of the mobile unit.

Each sensor may be adapted to receive data from a mobile unit located within its monitoring area, wherein the data comprises an identification of the mobile unit. For example, a mobile unit can be implemented as a wearable RFID batch storing a unique identification number and automatically transmit this stored number to a sensor as soon as a communication link is established between the mobile unit and the sensor. This makes tracking of persons or assets with the batch also in areas with poor mobile RF reception possible.

The transmitter may be a sensor of the network of sensors being adapted to establish a communication link to the monitoring and control element and to transmit received tracking data via the communication link. For example, the transmitter may be an extended sensor comprising also a communication module for establishing communication links to the monitoring and control element.

The transmitter may be adapted to establish a mobile RF communication link and/or a satellite RF communication link as the communication to the monitoring and control element.

The network of sensors may be a network of smoke detection sensors, wherein each smoke detection sensor is adapted to communicate with mobile units located within a monitoring area of the smoke detection sensor and to route tracking data of mobile units over other smoke detection sensors located in its neighborhood to the transmitter. For example, existing smoke detectors with communication capabilities with neighbored smoke detectors may be extended to communication with mobile units and to route tracking data.

A further embodiment of the invention relates to a sensor for usage with a system of the invention and as described herein and being adapted to communicate with mobile units located within a monitoring area of the sensor and to route tracking data of the mobile units over other sensors located in its neighborhood to the transmitter.

The sensor may comprise stored positioning data and may be adapted to integrate the stored positioning data in routed tracking data. The stored positioning data may be for example an installation position of a sensor in a building, or simply a floor identification of a building, or a certain area in a building which corresponds to the monitoring area of the sensor at its installation position.

The sensor may further comprise a RF module being adapted to automatically establish a communication link with a mobile unit located within the monitoring area of the sensor, wherein the monitoring area of the sensor is determined by a signal reception sensitivity threshold of the RF module. The RF module may be for example adapted to communicate according to various RF standards such as WiFi™, Bluetooth™, and RFID etc. and operated in a kind of listening mode, where it is able to detect RF signals from a mobile unit within its monitoring area. The sensitivity threshold may be programmable so that the monitoring are of the sensor can be adjusted to the desired dimensions of the monitoring are.

The sensor may comprise stored routing data for routing tracking data to a transmitter for transmitting the tracking data via a communication link to a monitoring and control element. For example, each sensor can be programmed after its installation in a building with an optimal route to a monitoring and control element as routing data so that tracking data may be as efficiently as possible routed through the network of sensors.

The sensor may further comprise a transmitter for transmitting the tracking data via a communication link to the monitoring and control element.

The RF module may comprise a WiFi™, Bluetooth™ and/or ZigBee™ module and/or an active or passive RFID module. With a Bluetooth™ or WiFi™ module, a sensor could for example establish communication links with smartphones or mobile computers carried by persons.

A yet further embodiment of the invention relates to a transmitter for usage with a system of the invention and as described herein and being adapted for transmitting tracking data of mobile units via a communication link to a monitoring and control element for processing the tracking data and being further adapted to communicate with a sensor of the invention and as described herein.

The transmitter may further comprise a communication module for establishing a mobile communication link and/or a satellite communication link as the communication link to the monitoring and control element

These and other aspects of the invention will be apparent from and elucidated with reference to the embodiments described hereinafter.

The invention will be described in more detail hereinafter with reference to exemplary embodiments. However, the invention is not limited to these exemplary embodiments.

### BRIEF DESCRIPTION OF DRAWINGS

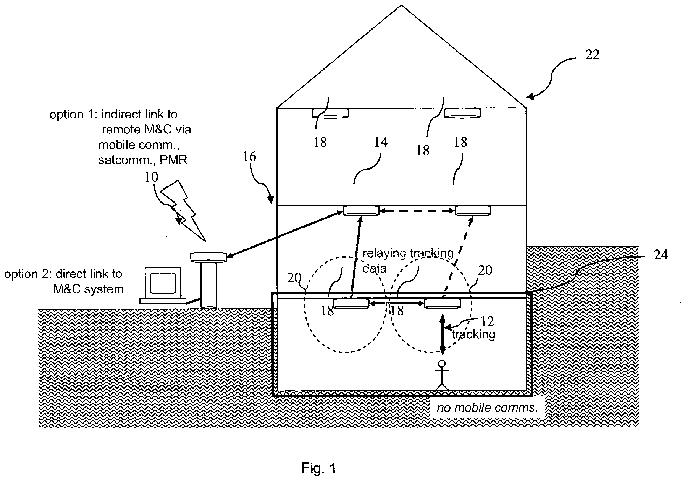

Fig. 1 shows an embodiment of a system for indoor tracking of mobile units according to the invention installed in a building.

### DESCRIPTION OF EMBODIMENTS

In the following, functionally similar or identical elements may have the same reference numerals.

Fig. 1 shows a building 22 with two floors and a basement 24. In each floor and the basement, sensors 18 are installed, for example extended smoke detectors. The sensors 18 are adapted to form a network of sensors, wherein each sensor 18 is able to communicate with its neighbor sensor in the same floor or the neighbored floor as outlined by the arrows between the sensors 18 installed in the basement 24 and the floor above. A communication link between two neighbored sensors enables the exchange of data between the sensors at a bitrate sufficient for transmitting tracking data. Communication links between neighbored sensors can for example be established with a standard radio communication technology for low bitrate and short distance communication such as Bluetooth™ or ZigBee™ or with WiFi™. The network of sensors 18 can be established in an ad-hoc modus not requiring any routing instance. For example, upon installation of the sensors 18 in the building each sensor can be switched in a search mode for requesting data from neighbored sensors such as their identifiers and store these data internally in a kind of routing table. In each sensor 18, the identifier of a transmitter 14 can be stored and used for routing tracking data.

Each sensor 18 can store a unique identifier of itself such as a number or an address. Additionally or alternatively, each sensor 18 can store as positioning data its own position within the building, for example coordinates in a general coordinate system, the location in the building such as the floor or any other position related data. Furthermore, each sensor 18 can store routing data for routing tracking data to a transmitter 14. The routing data can for example comprise a routing table with routes in the network of sensors to the transmitter 14. The routing data can be generated for example upon installation as explained above, and can contain the identifier of the transmitter 14.

Each sensor 18 is able to communicate with a mobile unit 12 located in its monitoring area 20. The monitoring area can be determined by a signal reception sensitivity threshold of a RF module of a sensor 18. The RF module of a sensor 18 can for example be a Bluetooth™, ZigBee™, WiFi™ or RFID module and programmed to listen to RF signals transmitted by mobile units 12 within a certain distance such as for example some meters. If the RF module detects a signal from a mobile unit 12, it can automatically establish a communication link with the mobile unit 12. Then, the sensor 18 can automatically generate tracking data related to the mobile unit 12 and route the tracking data to a neighbored sensor 18, which routes the data further to a neighbored sensor and so on until the tracking data is received by the transmitter 14. The transmitter 14 located in the first floor of the building can establish a communication link 16 to a monitoring and control element 10 for tracking mobile units 12. The communication link 16 is established as a standard mobile RF communication or satellite RF communication link.

The tracking data routed from a sensor 18 to the transmitter 14 can comprise different data enabling a tracking of mobile units in the building, for example the stored unique identifier of the sensor, positioning data of the sensor and/or data received from the mobile unit 12 such as an identifier of the mobile unit 12 or positioning data from the mobile unit 12.

For example, the mobile unit 12 can be an active or passive RFID batch carried by a person or fixed to a mobile asset. After establishing a communication link with a sensor 18 in its monitoring area 20, the RFID batch can transmit an unique identification number to the sensor 18, the sensor 18 can add to the unique identification number (mobile unit identifier) its own unique identifier (sensor identifier) and a time stamp. These data can then be routed via neighbored sensors 18 to the transmitter 14, which can be also a sensor with a communication module for establishing a standard RF mobile or satellite RF communication link to a monitoring and control element 10 for tracking mobile units 12 in the building 22. Upon receipt of these tracking data, the element 10 can determine by the sensor identifier the position of the sensor 18 in the building and determine that the mobile unit 12 with the mobile unit identifier contained in the received tracking data was at the time of the timestamp within the monitoring area 20 of the sensor 18 for example in the basement 24 of the building 22. The position of the mobile unit 12 can be displayed on a monitor of the monitoring and control element 10.

It is also possible to use for example a smartphone as mobile unit 12. If Bluetooth™ or WiFi™ is activated on the smartphone, or the smartphone is equipped with a NFC (Near Field Communication) or RFID module, a sensor 18 could detect the smartphone by receiving Bluetooth™, WiFi™, NFC or RFID signals from the smartphone. The sensors 18 could also transmit periodically search signals for RF units located in their monitoring areas 20. Upon receipt of such a search signal, a RF unit could transmit a reply signal containing an identifier of the RF unit, for example an identifier of the smartphone or of the NFC or RFID module.

The invention enables to relay tracking data to the outside of the building or any area within the building with sufficient connectivity via the connectivity existing between neighboring sensors, for example smoke detectors extended for tracking. The invention can also use other types of sensors and elements, e.g., sprinklers. With the invention the lack of connectivity in parts of indoor environments can be overcome and it can be allowed for low data rate and low data volume communication as required for automated indoor tracking. The invention uses communication capabilities between individual sensors or elements in indoor environments to relay data required for automated tracking of persons or assets in indoor environments in the absence of standard connectivity through mobile communication systems or Wifi™ (and their successor systems). The tracking data generated by the indoor tracking system for example based on the respective capability of smoke detectors or similar equipment can be relayed between neighboring units until it reaches a transmitter, which forwards the data from the inter-unit communication link to mobile communication, satellite communication or other communication links for processing in a remote monitoring & control element, or until it is directly fed into a local monitoring and control element for further processing.

The invention has the following advantages:

The invention does not require extensive infrastructure installations to extend the coverage for standard mobile connectivity for the sole purpose of relaying tracking relevant data. It uses sensors or elements to be rolled out across the building for other purposes by regulation, i.e. smoke detectors, sprinklers, other suited sensors used for "smart home" concepts and solutions.

By relaying data via neighboring elements of the sensor or element infrastructure, the invention bridges holes in the connectivity in specific areas of buildings or specific emergency situations.

The invention can take advantage of the autonomy of smoke detectors, which operate on batteries independently from a fixed power supply, i.e. even in case of major fire incidents, where firefighters cut power supply or where power supply is cut off by the incident, the system remains operational.

The invention can take advantage of an existing infrastructure within buildings, which is required by regulation.

The invention can take advantage of the existing infrastructure of smoke detectors to be checked and visited at least twice a year thus allowing for efficient maintenance and implementation as well as integration with already existing infrastructure.

### REFERENCE NUMERALS AND ACRONYMS

- 10: monitoring and control element
- 12: mobile unit
- 14: transmitter
- 16: communication link between transmitter 14 and monitoring and control element 10
- 18: sensor
- 20: monitoring area of the sensor 18
- 22: building
- 24: basement

## Claims

1. A system for indoor tracking of mobile units comprising
- a monitoring and control element (10) for processing tracking data of mobile units (12),
- a transmitter (14) for transmitting the tracking data via a communication link (16) to the monitoring and control element (10), and
- a network of sensors (18), wherein each sensor is adapted to communicate with mobile units located within a monitoring area (20) of the sensor and to route tracking data of mobile units over other sensors located in its neighborhood to the transmitter according to routing data comprising a routing table with routes in the network of sensors to the transmitter, wherein the routing table is generated upon installation of the network of sensors and comprises unique identifiers of sensors neighbored to the sensor storing the routing table, wherein the tracking data routed from a sensor (18) to the transmitter (14) comprises at least positioning data from sensor data and positioning data, wherein the sensor data comprises a unique identification of the sensor being the origin of the route of the tracking data and the positioning data comprise a stored installation position of the sensor being the origin of the route of the tracking data.

2. The system of claim 1, wherein each sensor (18) is adapted to automatically route tracking data of a mobile unit upon establishment of a communication with the mobile unit.

3. The system of claim 1 or 2, wherein each sensor (18) is adapted to receive data from a mobile unit located within its monitoring area (20), wherein the data comprises an identification of the mobile unit (12).

4. The system of any of the preceding claims, wherein the transmitter (14) is a sensor of the network of sensors being adapted to establish a communication link (16) to the monitoring and control element (10) and to transmit received tracking data via the communication link.

5. The system of any of the preceding claims, wherein the transmitter (14) is adapted to establish a mobile RF communication link and/or a satellite RF communication link as the communication to the monitoring and control element.

6. The system of any of the preceding claims, wherein the network of sensors is a network of smoke detection sensors, wherein each smoke detection sensor is adapted to communicate with mobile units located within a monitoring area of the smoke detection sensor and to route tracking data of mobile units over other smoke detection sensors located in its neighborhood to the transmitter.

7. A sensor (18) for usage with a system of any of the preceding claims and being adapted to communicate with mobile units located within a monitoring area (20) of the sensor, wherein the sensor is adapted to being part of a network of sensors and to route tracking data of the mobile units over other sensors located in its neighborhood to a transmitter (14) for transmitting the tracking data via a communication link (16) to a monitoring and control element (10) for processing tracking data of mobile units (12), wherein the sensor is adapted to route tracking data according to routing data comprising a routing table with routes in the network of sensors to the transmitter, wherein the routing table is generated upon installation of the network of sensors and comprises unique identifiers of sensors neighbored to the sensor storing the routing table, wherein the sensor comprises stored positioning data and is adapted to integrate the stored positioning data in routed tracking data.

8. The sensor of claim 7, further comprising a RF module being adapted to automatically establish a communication link with a mobile unit (12) located within the monitoring area (20) of the sensor, wherein the monitoring area (20) of the sensor is determined by a signal reception sensitivity threshold of the RF module.

9. The sensor of claim 7 or 8, comprising stored routing data for routing tracking data to a transmitter (14) for transmitting the tracking data via a communication link (16) to a monitoring and control element (10).

10. The sensor of any of claims 7 to 9, further comprising a transmitter (14) for transmitting the tracking data via a communication link (16) to the monitoring and control element (10).

11. The sensor of claim 7, 8, 9 or 10, wherein the RF module comprises a WiFi™, Bluetooth™ and/or ZigBee™ module and/or an active or passive RFID module.

12. A transmitter (14) for usage with a system of any of the preceding claims and being adapted for transmitting tracking data of mobile units (12) via a communication link (16) to a monitoring and control element (10)) for processing the tracking data and being further adapted to receive the tracking data from a sensor (18) of any of the claims 7 to 11 from a network of sensors, wherein the tracking data routed from the sensor (18) to the transmitter (14) comprises at least positioning data from sensor data and positioning data, wherein the sensor data comprises a unique identification of the sensor being the origin of the route of the tracking data and the positioning data comprise a stored installation position of the sensor being the origin of the route of the tracking data.

13. The transmitter of claim 12, further comprising a communication module for establishing a mobile communication link and/or a satellite communication link as the communication link (16) to the monitoring and control element (10).

## Patentansprüche

1. System zur Innenraumverfolgung von mobilen Einheiten, umfassend
- ein Beobachtungs- und Steuerelement (10) zur Verarbeitung von Verfolgungsdaten mobiler Einheiten (12),
- einen Transmitter (14) zum Übertragen der Verfolgungsdaten über eine Kommunikationsverbindung (16) an das Beobachtungs- und Steuerelement (10) und
- ein Netzwerk von Sensoren (18), wobei jeder Sensor dafür ausgelegt ist, mit mobilen Einheiten, die sich innerhalb eines Beobachtungsbereichs (20) des Sensors befinden, zu kommunizieren, und Verfolgungsdaten mobiler Einheiten über andere Sensoren, die sich in seiner Nachbarschaft befinden, in Übereinstimmung mit Leitwegdaten, die eine Leitwegtabelle mit Leitwegen in dem Netzwerk von Sensoren an den Transmitter umfassen, an den Transmitter zu leiten, wobei die Leitwegtabelle bei Installation des Netzwerks von Sensoren erzeugt wird und eindeutige Kennungen von Sensoren in Nachbarschaft zu dem Sensor, der die Leitwegtabelle speichert, umfasst, wobei die Verfolgungsdaten, die von einem Sensor (18) an den Transmitter (14) geleitet werden, mindestens Positionierungsdaten aus Sensordaten und Positionierungsdaten umfassen, wobei die Sensordaten eine eindeutige Kennung des Sensors, der der Ursprung des Leitwegs der Verfolgungsdaten ist, umfassen, und die Positionierungsdaten eine gespeicherte Installationsposition des Sensors, der der Ursprung des Leitwegs der Verfolgungsdaten ist, umfassen.

2. System nach Anspruch 1, wobei jeder Sensor (18) dafür ausgelegt ist, Verfolgungsdaten einer mobilen Einheit bei Herstellung einer Kommunikation mit der mobilen Einheit automatisch weiterzuleiten.

3. System nach Anspruch 1 oder 2, wobei jeder Sensor (18) dafür ausgelegt ist, Daten von einer mobilen Einheit, die sich innerhalb seines Beobachtungsbereichs (20) befindet, zu empfangen, wobei die Daten eine Kennung der mobilen Einheit (12) umfassen.

4. System nach einem der vorstehenden Ansprüche, wobei der Transmitter (14) ein Sensor des Netzwerks von Sensoren ist, der dafür ausgelegt ist, eine Kommunikationsverbindung (16) mit dem Beobachtungs- und Steuerelement (10) herzustellen und empfangene Verfolgungsdaten über die Kommunikationsverbindung zu übertragen.

5. System nach einem der vorstehenden Ansprüche, wobei der Transmitter (14) dafür ausgelegt ist, eine mobile HF-Kommunikationsverbindung und/oder eine Satelliten-HF-Kommunikationsverbindung als die Kommunikation an das Beobachtungs- und Steuerelement herzustellen.

6. System nach einem der vorstehenden Ansprüche, wobei das Netzwerk von Sensoren ein Netzwerk von Rauchmeldesensoren ist, wobei jeder Rauchmeldesensor dafür ausgelegt ist, mit mobilen Einheiten zu kommunizieren, die sich innerhalb eines Beobachtungsbereichs des Rauchmeldesensors befinden und Verfolgungsdaten von mobilen Einheiten über andere Rauchmeldesensoren, die sich in seiner Nachbarschaft zu dem Transmitter befinden, zu leiten.

7. Sensor (18) zur Verwendung mit einem System nach einem der vorstehenden Ansprüche und dafür ausgelegt, mit mobilen Einheiten, die sich innerhalb eines Beobachtungsbereichs (20) des Sensors befinden, zu kommunizieren, wobei der Sensor dafür ausgelegt ist, Teil eines Netzwerks von Sensoren zu sein, und Verfolgungsdaten der mobilen Einheiten über andere Sensoren, die sich in seiner Nachbarschaft zu einem Transmitter (14) befinden, zum Übertragen der Verfolgungsdaten über eine Kommunikationsverbindung (16) an ein Beobachtungs- und Steuerelement (10) zum Verarbeiten von Verfolgungsdaten von mobilen Einheiten (12) zu leiten, wobei der Sensor dafür ausgelegt ist, Verfolgungsdaten gemäß Leitwegdaten zu leiten, die eine Leitwegtabelle mit Leitwegen in dem Netzwerk von Sensoren an den Transmitter umfassen, wobei die Leitwegtabelle bei Installation des Netzwerks von Sensoren erzeugt wird und eindeutige Kennungen von Sensoren in Nachbarschaft zu dem Sensor, der die Leitwegtabelle speichert, umfasst, wobei der Sensor gespeicherte Positionierungsdaten umfasst und dafür ausgelegt ist, die gespeicherten Positionierungsdaten in die geleiteten Verfolgungsdaten zu integrieren.

8. Sensor nach Anspruch 7, ferner ein HF-modul umfassend, das dafür ausgelegt ist, automatisch eine Kommunikationsverbindung mit einer mobilen Einheit (12) herzustellen, die sich innerhalb des Beobachtungsbereichs (20) des Sensors befindet, wobei der Beobachtungsbereich (20) des Sensors von einer Signalempfangsempfindlichkeitsschwelle des HF-Moduls bestimmt wird.

9. Sensor nach Anspruch 7 oder 8, gespeicherte Leitwegdaten für das Leiten von Verfolgungsdaten an einen Transmitter (14) zum Übertragen der Verfolgungsdaten über eine Kommunikationsverbindung (16) an ein Beobachtungs- und Steuerelement (10) umfassend.

10. Sensor nach einem der Ansprüche 7 bis 9, ferner einen Transmitter (14) zum Übertragen der Verfolgungsdaten über eine Kommunikationsverbindung (16) an das Beobachtungs- und Steuerelement (10) umfassend.

11. Sensor nach Anspruch 7, 8, 9 oder 10, wobei das HF-Modul ein WiFi™-, Bluetooth™- und/oder ZigBee™-Modul umfasst und/oder ein aktives oder passives RFID-Modul.

12. Transmitter (14) zur Verwendung mit einem System nach einem der vorstehenden Ansprüche und ausgelegt für das Übertragen von Verfolgungsdaten mobiler Einheiten (12) über eine Kommunikationsverbindung (16) an ein Beobachtungs- und Steuerelement (10) zum Verarbeiten der Verfolgungsdaten und ferner dafür ausgelegt, die Verfolgungsdaten von einem Sensor (18) nach einem der Ansprüche 7 bis 11 aus einem Netzwerk von Sensoren zu empfangen, wobei die Verfolgungsdaten, die von dem Sensor (18) an den Transmitter (14) geleitet werden, mindestens Positionierungsdaten aus Sensordaten und Positionierungsdaten umfassen, wobei die Sensordaten eine eindeutige Kennung des Sensors umfassen, der der Ursprung des Leitwegs der Verfolgungsdaten ist, und die Positionierungsdaten eine gespeicherte Installationsposition des Sensors umfassen, der der Ursprung des Leitwegs der Verfolgungsdaten ist.

13. Transmitter nach Anspruch 12, ferner ein Kommunikationsmodul für das Herstellen einer mobilen Kommunikationsverbindung und/oder einer Satellitenkommunikationsverbindung als die Kommunikationsverbindung (16) zu dem Beobachtungs- und Steuerelement (10) umfassend.

## Revendications

1. Système pour assurer le suivi d'intérieur d'unités mobiles comprenant :
- un élément de surveillance et de commande (10) pour traiter des données de suivi d'unités mobiles (12),
- un émetteur (14) pour transmettre les données de suivi via une liaison de communication (16) à l'élément de surveillance et de commande (10), et
- un réseau de capteurs (18), chaque capteur étant conçu pour communiquer avec des unités mobiles localisées au sein d'une zone de surveillance (20) du capteur, et pour acheminer des données de suivi d'unités mobiles par l'intermédiaire d'autres capteurs localisés dans son voisinage vers l'émetteur en fonction de données de routage comprenant une table de routage avec des chemins dans le réseau de capteurs allant vers l'émetteur, la table de routage étant générée lors de l'installation du réseau de capteurs et comprenant des identifiants inédits de capteurs voisins du capteur stockant la table de routage, les données de suivi acheminées à partir d'un capteur (18) vers l'émetteur (14) comprenant au moins des données de positionnement en provenance de données de capteur et de données de positionnement, les données de capteur comprenant une identification inédite du capteur laquelle est l'origine du chemin des données de suivi et les données de positionnement comprenant une position d'installation stockée du capteur laquelle est l'origine du chemin des données de suivi.

2. Système selon la revendication 1, chaque capteur (18) étant conçu pour acheminer automatiquement des données de suivi d'une unité mobile lors de l'établissement d'une communication avec l'unité mobile.

3. Système selon la revendication 1 ou 2, chaque capteur (18) étant conçu pour recevoir des données à partir d'une unité mobile localisée au sein de sa zone de surveillance (20), les données comprenant une identification de l'unité mobile (12).

4. Système selon l'une quelconque des revendications précédentes, l'émetteur (14) étant un capteur du réseau de capteurs qui est conçu pour établir une liaison de communication (16) vers l'élément de surveillance et de commande (10) et pour transmettre des données de suivi reçues via la liaison de communication.

5. Système selon l'une quelconque des revendications précédentes, l'émetteur (14) étant conçu pour établir une liaison de communication RF mobile et/ou une liaison de communication RF satellitaire en tant que communication vers l'élément de surveillance et de commande.

6. Système selon l'une quelconque des revendications précédentes, le réseau de capteurs étant un réseau de capteurs de détection de fumée, chaque capteur de détection de fumée étant conçu pour communiquer avec des unités mobiles localisées au sein d'une zone de surveillance du capteur de détection de fumée, et pour acheminer des données de suivi d'unités mobiles par l'intermédiaire d'autres capteurs de détection de fumée localisés dans son voisinage vers l'émetteur.

7. Capteur (18) destiné à un usage avec un système selon l'une quelconque des revendications précédentes et étant conçu pour communiquer avec des unités mobiles localisées au sein d'une zone de surveillance (20) du capteur, le capteur étant conçu pour faire partie d'un réseau de capteurs, et pour acheminer des données de suivi des unités mobiles par l'intermédiaire d'autres capteurs localisés dans son voisinage vers un émetteur (14) pour transmettre les données de suivi via une liaison de communication (16) à un élément de surveillance et de commande (10) pour traiter des données de suivi d'unités mobiles (12), le capteur étant conçu pour acheminer des données de suivi en fonction de données de routage comprenant une table de routage avec des chemins dans le réseau de capteurs allant vers l'émetteur, la table de routage étant générée lors de l'installation du réseau de capteurs et comprenant des identifiants inédits de capteurs voisins du capteur stockant la table de routage, le capteur comprenant des données de positionnement stockées et étant conçu pour intégrer les données de positionnement stockées dans des données de suivi acheminées.

8. Capteur selon la revendication 7, comprenant en outre un module RF qui est conçu pour établir automatiquement une liaison de communication avec une unité mobile (12) localisée au sein de la zone de surveillance (20) du capteur, la zone de surveillance (20) du capteur étant déterminée par un seuil de sensibilité de réception de signaux du module RF.

9. Capteur selon la revendication 7 ou 8, comprenant des données de routage stockées pour acheminer des données de suivi vers un émetteur (14) pour transmettre les données de suivi via une liaison de communication (16) à un élément de surveillance et de commande (10).

10. Capteur selon l'une quelconque des revendications 7 à 9, comprenant en outre un émetteur (14) pour transmettre les données de suivi via une liaison de communication (16) à l'élément de surveillance et de commande (10).

11. Capteur selon la revendication 7, 8, 9 ou 10, le module RF comprenant un module WiFi™, Bluetooth™ et/ou ZigBee™ et/ou un module RFID actif ou passif.

12. Émetteur (14) destiné à un usage avec un système selon l'une quelconque des revendications précédentes et étant conçu pour émettre des données de suivi d'unités mobiles (12) via une liaison de communication (16) vers un élément de surveillance et de commande (10)) pour traiter les données de suivi, et étant conçu en outre pour recevoir les données de suivi à partir d'un capteur (18) selon l'une quelconque des revendications 7 à 11 en provenance d'un réseau de capteurs, les données de suivi acheminées à partir du capteur (18) vers l'émetteur (14) comprenant au moins des données de positionnement en provenance de données de capteur et de données de positionnement, les données de capteur comprenant une identification inédite du capteur laquelle est l'origine du chemin des données de suivi et les données de positionnement comprenant une position d'installation stockée du capteur laquelle est l'origine du chemin des données de suivi.

13. Émetteur selon la revendication 12, comprenant en outre un module de communication pour établir une liaison de communication mobile et/ou une liaison de communication satellitaire en tant que liaison de communication (16) vers l'élément de surveillance et de commande (10).
